# EUROPÄISCHE PATENTSCHRIFT

(11) **EP 3 450 089 B1**
(45) Veröffentlichungstag und Bekanntmachung des Hinweises auf die Patenterteilung: **10.06.2020**
(21) Anmeldenummer: 17188552.8
(22) Anmeldetag: 30.08.2017
(51) Int. Cl.: B23Q 1/76, B23B 1/00, B23B 5/08, B23B 23/00

(54) **VORRICHTUNG UND VERFAHREN ZUM SPANNEN EINES DREHBAR GELAGERTEN WERKSTÜCKS**
DEVICE AND METHOD FOR CLAMPING A ROTATABLY MOUNTED WORKPIECE
DISPOSITIF ET PROCÉDÉ POUR SERRAGE D'UNE PIÈCE D'USINAGE MONTÉE À ROTATION

(43) Veröffentlichungstag der Anmeldung: 06.03.2019
(73) Patentinhaber: Schwäbische Werkzeugmaschinen GmbH, 78713 Schramberg-Waldmössingen (DE)
(72) Erfinder: Sadzik, Markus, 72280 Dornstetten (DE)
(74) Vertreter: Kohler Schmid Möbus Patentanwälte

(56) Entgegenhaltungen:
- EP-A1- 1 952 938
- EP-A2- 0 334 298
- DE-A1- 19 749 939
- JP-U- S4 887 690
- US-A- 3 225 631
- US-A- 5 222 421
- US-A1- 2004 237 734
- US-B1- 6 202 520

## Beschreibung

Die Erfindung betrifft sowohl eine Vorrichtung zum Spannen eines um eine Drehachse drehbaren Werkstücks gemäß dem Oberbegriff von Anspruch 1 als auch ein Verfahren zum spanabhebenden Bearbeiten von Werkstücken in einer Werkzeugmaschine mit einer solchen Spannvorrichtung.

Eine derartige Spannvorrichtung ist beispielsweise durch die US 5 222 421 A bekannt geworden.

Aus der US 5 222 421 A ist eine Drehbank zur Bearbeitung von Rundstäben bekannt. Der Rundstab ist an seinem einen Ende in einem zentrischen Spannfutter, das drehangetrieben ist, festgespannt und an seinem anderen Ende mittels einer Reitstockspitze axial, aber drehbar festgespannt. Zur Zentrierung des Rundstabes zwischen Spannfutter und Reitstockspitze sind entlang des Rundstabes mehrere Klemmeinrichtungen mit jeweils drei Klemmarmen angeordnet, an deren freien Enden jeweils eine Rolle zur drehbaren Lagerung des Rundstabes um die Drehachse gelagert ist.

Weiter ist aus der US 3 225 631 A eine ähnliche Spannvorrichtung bekannt, bei der zwischen zentrischem Spannfutter und Reitstockspitze eine Klemmeinrichtung mit mehreren drehbar gelagerten Rollen angeordnet ist, um das stabförmige Werkzeug abzustützen und zu zentrieren.

Für die spanabhebende Bearbeitung werden Werkstück-Rohteile (meist Vierkantprisma), die einen Fuß und einen Kopf mit einem zylindrischen Zapfen aufweisen, im Fußbereich mit einem zentrischen Zweibackenfutter gespannt, welches von einer angetriebenen Maschinenachse (C-Achse) angetrieben wird. Im Kopfbereich werden die Werkstücke mit einer mitdrehenden, mechanischen Spannzange am zylindrischen Zapfen gespannt. Allerdings hat diese bekannte Spannvorrichtung folgende Nachteile:
- Der aufgeschweißte Zapfen ist aufgrund von Fertigungstoleranzen nicht zentrisch am Rohteil positioniert. Aus diesem Grund muss der Zapfen auf einer separaten Spannlage bearbeitet und das Zentrum des Zapfens zur Spannfläche am Fuß hergestellt werden.
- Es muss durch entsprechende Maßnahmen (Ausrichten, Formbacken,...) sichergestellt werden, dass das Werkstück bei der Vorbearbeitung (Bearbeitung des Zapfens) und der Hauptbearbeitung (Bearbeitung des Vierkantprisma) gleich positioniert wird.
- Bei der Schruppbearbeitung des Vierkantprismas verformt sich das Werkstück, so dass der Zapfen nicht mehr zentrisch zur Spannfläche am Fuß ist. Die Verformung kann vor der Schlichtbearbeitung nicht ausgeglichen werden und beeinflusst die Maßgenauigkeit des Fertigteils negativ.
- Schwingungen und hoher Verschleiß aufgrund des instabilen Aufbaus.

Es ist demgegenüber die Aufgabe der Erfindung, diese Nachteile bei einer Spannvorrichtung der eingangs genannten Art zu beheben und insbesondere auch unterschiedlich lange Werkstücke spannen zu können.

Diese Aufgabe wird erfindungsgemäß durch eine Spannvorrichtung mit den Markmalen von Anspruch 1 gelöst.

Vorzugsweise sind die erste und/oder die zweite Spanneinrichtung als Backenfutter, insbesondere als Zweibackenfutter, und das Spannelement als Spannzylinder ausgebildet.

Bevorzugt ist das Spannelement mindestens bis auf Höhe der Spannbacken, insbesondere mindestens bis auf Höhe der Laufrollen, axial vorschiebbar, um sowohl lange Zapfen, welche über die Rollen axial vorstehen, als auch kurze Zapfen, welche nicht über die Rollen vorstehen, spannen zu können.

Die Erfindung betrifft weiterhin eine Werkzeugmaschine zur spanabhebenden Bearbeitung von Werkstücken mit einer wie oben ausgebildeten Spannvorrichtung zum Spannen eines Werkstücks und mit einem axial und radial zustellbaren Schneidwerkzeug zur spanabhebenden Bearbeitung des eingespannten Werkstücks.

Die Erfindung betrifft schließlich auch ein Verfahren zum spanabhebenden Bearbeiten von Werkstücken, welche einen Fuß und einen Kopf mit einem insbesondere zylindrischen Zapfen aufweisen, in einer wie oben ausgebildeten Werkzeugmaschine, mit folgenden Bearbeitungsschritten:
- Einspannen des Fußes des Werkstücks in der ersten Spanneinrichtung und anschließend axiales Einspannen des Werkstücks durch Vorschieben des Spannelements bis zur stirnseitigen Anlage am Zapfen des Werkstücks;
- spanabhebendes Bearbeiten des Zapfens durch Drehen des Werkstücks und durch Zustellen des Schneidwerkzeugs, bis der Zapfen bezüglich der Drehachse zentriert ist;
- Einspannen des Zapfens in der zweiten Spanneinrichtung und anschließend Lösen der axialen Einspannung durch Zurückschieben des Spannelements;
- spanabhebendes (Vor)Bearbeiten des Werkstücks, insbesondere Schruppen, durch Drehen des Werkstücks und durch Zustellen des Schneidwerkzeugs;
- axiales Einspannen des Werkstücks durch Vorschieben des Spannelements bis zur stirnseitigen Anlage am Zapfen und anschließend Lösen der zweiten Spanneinrichtung;
- spanabhebendes Bearbeiten des Zapfens durch Drehen des Werkstücks und durch Zustellen des Schneidwerkzeugs, bis der Zapfen bezüglich der Drehachse zentriert ist;
- Einspannen des Zapfens in der zweiten Spanneinrichtung und anschließend Lösen der axialen Einspannung durch Zurückschieben des Spannelements; und
- spanabhebendes (Nach)Bearbeiten des Werkstücks, insbesondere Schlichten, durch Drehen des Werkstücks und durch Zustellen des Schneidwerkzeugs.

Erfindungsgemäß können Vor- und Nachbearbeitung in der gleichen Spannlage des Werkstücks durchgeführt werden und insbesondere automatisiert ablaufen.

Weitere Vorteile und vorteilhafte Ausgestaltungen des Gegenstands der Erfindung ergeben sich aus der Beschreibung, den Ansprüchen und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine Werkzeugmaschine zur spanabhebenden Bearbeitung von Werkstücken mit einer erfindungsgemäßen Spannvorrichtung zum Spannen eines zu bearbeitenden Werkstücks; und
- Fig. 2: eine Detailansicht der in Fig. 1 gezeigten Spannvorrichtung.

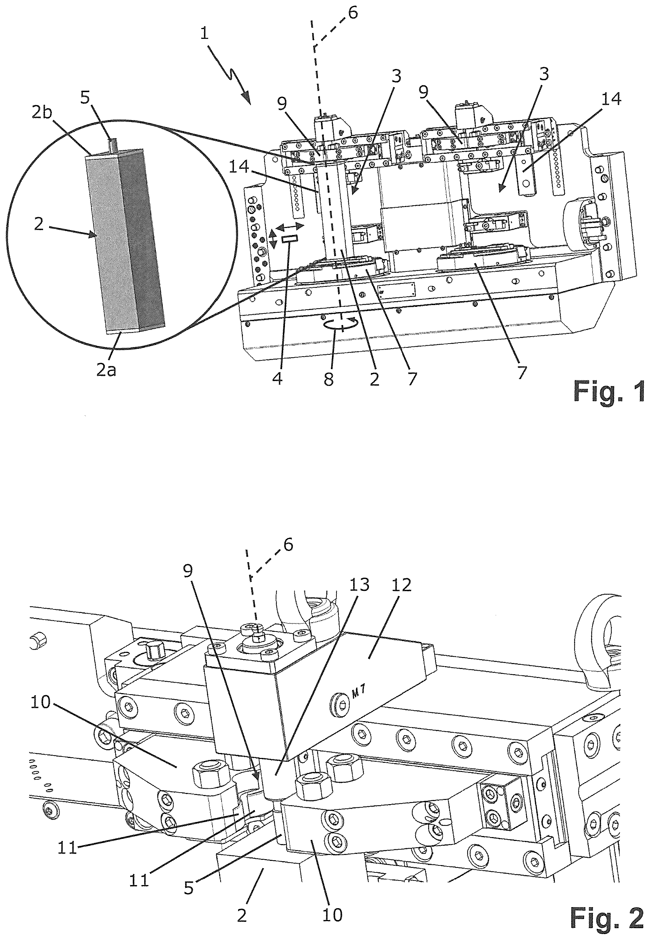

Die in **Fig. 1** gezeigte Werkzeugmaschine **1** dient zur spanabhebenden Bearbeitung von Werkstücken **2** und umfasst eine Spannvorrichtung **3** zum Spannen eines zu bearbeitenden Werkstücks 2 und ein hier lediglich schematisch angedeutetes, axial und radial zustellbares Schneidwerkzeug **4** zur spanabhebenden Bearbeitung des eingespannten Werkstücks 2. Das zu bearbeitende Werkstück 2, meist wie gezeigt ein Vierkantprisma-Rohteil, weist einen Fuß **2a** und einen Kopf **2b** mit einem angeschweißten zylindrischen Zapfen **5** auf.

Die Spannvorrichtung 3 umfasst eine um eine Drehachse **6** drehbar gelagerte, erste zentrische Spanneinrichtung **7** zum Spannen des Fußes 2a des Werkstücks 2, einen hier lediglich schematisch angedeuteten Drehantrieb **8** zum Drehen der ersten Spanneinrichtung 7 um die Drehachse 6, sowie eine um die Drehachse 6 drehbar gelagerte, zweite zentrische Spanneinrichtung **9**, z.B. in Form eines Zweibackenfutters, zum Spannen des Zapfens 5 des Werkstücks 2. Der Drehantrieb 8 ist beispielsweise durch eine angetriebene Maschinenachse (C-Achse) gebildet, wodurch eine hohe Steifigkeit des Gesamtsystems erreicht wird.

Wie in **Fig. 2** gezeigt, ist die zweite Spanneinrichtung 9 als Zweibackenfutter mit zwei Spannbacken **10** ausgebildet, deren Spannflächen jeweils durch zwei Laufrollen **11** gebildet sind, welche um eine zur Drehachse 6 parallele Achse frei drehbar gelagert sind. Auf der der ersten Spanneinrichtung 7 abgewandten Seite der zweiten Spanneinrichtung 9, also oberhalb der zweiten Spanneinrichtung 9, ist eine z.B. hydraulische, axiale Spanneinrichtung **12** mit einem um die Drehachse 6 drehbar gelagerten Spannelement **13** angeordnet, das in axialer Richtung bis zur stirnseitigen Anlage an dem Zapfen 5 eines in der ersten Spanneinrichtung 7 eingespanntes Werkstücks 2 vorschiebbar ist, um das Werkstück 2 axial zu spannen. Das Spannelement 13 sollte vorteilhaft mindestens bis auf Höhe der Spannbacken 10, besser noch bis mindestens auf Höhe der Laufrollen 11, axial vorschiebbar sein, um an unterschiedlich langen Zapfen 5 anzuliegen. Das Spannelement 13 ist frei drehbar gelagert oder ebenfalls vom Drehantrieb 8 angetrieben und kann beispielsweise als Spannzylinder ausgeführt sein. Die zweite Spanneinrichtung 9 und die axiale Spanneinrichtung 12 sind aneinander befestigt, um als Einheit in maschinenseitigen Führungen **14** mittels einer Spindel ca. 100mm axial verschoben werden zu können. Dadurch kann die Spannvorrichtung 3 mit geringem Aufwand auf unterschiedlich lange Werkstücke 2 umgerüstet werden.

Die einzelnen Bearbeitungsschritte zum spanabhebenden Bearbeiten eines Werkstücks 2 in der Werkzeugmaschine 1 sind wie folgt:
- Einspannen des Fußes 2a des Werkstücks 2 in der ersten Spanneinrichtung 7 und anschließend axiales Einspannen des Werkstücks 2 durch axiales Vorschieben des Spannelements 13 bis zur stirnseitigen Anlage am Zapfen 5 des Werkstücks 2. Die zweite Spanneinrichtung 9 befindet sich im geöffneten Zustand, so dass der Zapfen 5 für das Schneidwerkzeug 4 zwischen den geöffneten Spannbacken 10 hindurch zugänglich ist.
- spanabhebendes Bearbeiten des Zapfens 5 durch Drehen des Werkstücks 2 und durch radiales und axiales Zustellen des Schneidwerkzeugs 4, bis der Zapfen 5 bezüglich der Drehachse 6 zentriert ist.
- Einspannen des Zapfens 5 in der zweiten Spanneinrichtung 9 und anschließend Lösen der axialen Einspannung des Werkstücks 2 durch axiales Zurückschieben des Spannelements 13.
- spanabhebende Schruppbearbeitung des Werkstücks 2 durch Drehen des Werkstücks 2 und durch radiales und axiales Zustellen des Schneidwerkzeugs 4. Die Schruppbearbeitung des Werkstücks 2 erfolgt in der selben Spannung wie die vorangegangene Zentrierung des Zapfens 5. Nach der Schruppbearbeitung ist der Zapfen 5 aufgrund von Verformungen bzw. Spannungen des Werkstücks 2 nicht mehr zentrisch zur Drehachse 6.
- axiales Einspannen des Werkstücks 2 durch axiales Vorschieben des Spannelements 13 bis zur stirnseitigen Anlage am Zapfen 5 und anschließend Lösen der zweiten Spanneinrichtung 9. Die zweite Spanneinrichtung 9 befindet sich im geöffneten Zustand, so dass der Zapfen 5 für das Schneidwerkzeug 4 zwischen den geöffneten Spannbacken 10 hindurch zugänglich ist.
- spanabhebendes Bearbeiten des Zapfens 5 durch Drehen des Werkstücks 2 und durch radiales und axiales Zustellen des Schneidwerkzeugs 4, bis der Zapfen 5 bezüglich der Drehachse 6 zentriert ist. Somit ist das Zentrum des Zapfens 2 wieder hergestellt.
- Einspannen des Zapfens 5 in der zweiten Spanneinrichtung 9 und anschließend Lösen der axialen Einspannung durch axiales Zurückschieben des Spannelements 13.
- spanabhebende Schlichtbearbeitung des Werkstücks 2 durch Drehen des Werkstücks 2 und durch radiales und axiales Zustellen des Schneidwerkzeugs 4.

Die Schrupp- und Schlichtbearbeitungen des Werkstücks 2 werden somit in der gleichen Spannlage des Werkstücks 2 durchgeführt und können insbesondere automatisiert ablaufen.

## Patentansprüche

1. Spannvorrichtung (3) zum Spannen eines um eine Drehachse (6) drehbaren Werkstücks (2), welches einen Fuß (2a) und einen Kopf (2b) mit einem insbesondere zylindrischen Zapfen (5) aufweist,
mit einer um die Drehachse (6) drehbar gelagerten, ersten zentrischen Spanneinrichtung (7) zum Spannen des Fußes (2a) des Werkstücks (2),
mit einem Drehantrieb (8) zum Drehen der ersten Spanneinrichtung (7) um die Drehachse (6),
mit einer zweiten zentrischen Spanneinrichtung (9) zur drehbaren Lagerung des Zapfens (5) des Werkstücks (2) um die Drehachse (6), wobei die zweite Spanneinrichtung (9) mehrere Spannbacken (10) aufweist, deren Spannflächen jeweils durch mindestens eine Laufrolle (11) gebildet sind, welche um eine zur Drehachse (6) parallele Achse frei drehbar gelagert ist, und
mit einer auf der der ersten Spanneinrichtung (7) abgewandten Seite der zweiten Spanneinrichtung (9) angeordneten axialen Spanneinrichtung (12) mit einem um die Drehachse (6) drehbar gelagerten Spannelement (13), das in axialer Richtung bis zur stirnseitigen Anlage an dem Zapfen (5) eines in der ersten Spanneinrichtung (7) eingespannten Werkstücks (2) vorschiebbar ist, um das Werkstück (2) axial zu spannen,
**dadurch gekennzeichnet,**
**dass** die zweite Spanneinrichtung (9) und die axiale Spanneinrichtung (12) aneinander befestigt sind und als Einheit axial verschiebbar geführt sind.

2. Spannvorrichtung nach Anspruch 1, **dadurch gekennzeichnet, dass** die erste Spanneinrichtung (7) als Backenfutter, insbesondere als Zweibackenfutter, ausgebildet ist.

3. Spannvorrichtung nach Anspruch 1 oder 2, **dadurch gekennzeichnet, dass** die zweite Spanneinrichtung (9) als Backenfutter ausgebildet ist, insbesondere als Zweibackenfutter mit zwei Laufrollen (11) für jeden Spannbacken (10).

4. Spannvorrichtung nach einem der vorhergehenden Ansprüche, **dadurch gekennzeichnet, dass** das Spannelement (13) als Spannzylinder ausgeführt ist.

5. Spannvorrichtung nach einem der vorhergehenden Ansprüche, **dadurch gekennzeichnet, dass** das Spannelement (13) mindestens bis auf Höhe der Spannbacken (10), insbesondere bis mindestens auf Höhe der Laufrollen (11), axial vorschiebbar ist.

6. Werkzeugmaschine (1) zur spanabhebenden Bearbeitung von Werkstücken (2), mit einer Spannvorrichtung (3) nach einem der vorhergehenden Ansprüche zum Spannen eines Werkstücks (2) und mit einem axial und radial zustellbaren Schneidwerkzeug (4) zur Bearbeitung eines eingespannten Werkstücks (2).

7. Werkzeugmaschine nach Anspruch 6, **dadurch gekennzeichnet, dass** der Drehantrieb (8) der Spannvorrichtung (3) durch eine angetriebene Maschinenachse gebildet ist.

8. Verfahren zum spanabhebenden Bearbeiten von Werkstücken (2), welche einen Fuß (2a) und einen Kopf (2b) mit einem insbesondere zylindrischen Zapfen (5) aufweisen, in einer Werkzeugmaschine (1) nach Anspruch 6 oder 7, mit folgenden Bearbeitungsschritten:
- Einspannen des Fußes (2a) des Werkstücks (2) in der ersten Spanneinrichtung (7) und anschließend axiales Einspannen des Werkstücks (2) durch Vorschieben des Spannelements (13) bis zur stirnseitigen Anlage am Zapfen (5) des Werkstücks (2);
- spanabhebendes Bearbeiten des Zapfens (5) durch Drehen des Werkstücks (2) und durch Zustellen des Schneidwerkzeugs (4), bis der Zapfen (5) bezüglich der Drehachse (6) zentriert ist;
- Einspannen des Zapfens (5) in der zweiten Spanneinrichtung (9) und anschließend Lösen der axialen Einspannung des Werkstücks (2) durch Zurückschieben des Spannelements (13);
- spanabhebendes Bearbeiten des Werkstücks (2), insbesondere Schruppen, durch Drehen des Werkstücks (2) und durch Zustellen des Schneidwerkzeugs (4);
- axiales Einspannen des Werkstücks (2) durch Vorschieben des Spannelements (13) bis zur stirnseitigen Anlage am Zapfen (5) und anschließend Lösen der zweiten Spanneinrichtung (9);
- spanabhebendes Bearbeiten des Zapfens (5) durch Drehen des Werkstücks (2) und durch Zustellen des Schneidwerkzeugs (4), bis der Zapfen (5) bezüglich der Drehachse (6) zentriert ist;
- Einspannen des Zapfens (5) in der zweiten Spanneinrichtung (9) und anschließend Lösen der axialen Einspannung durch Zurückschieben des Spannelements (13); und
- spanabhebendes Bearbeiten des Werkstücks (2), insbesondere Schlichten, durch Drehen des Werkstücks (2) und durch Zustellen des Schneidwerkzeugs (4).

## Claims

1. Clamping fixture (3) for clamping a workpiece (2) which can be rotated about an axis of rotation (6) and which comprises a foot (2a) and a head (2b) having an, in particular cylindrical, pin (5), comprising
a first centric clamping device (7) which is mounted so as to be rotatable about the axis of rotation (6) and intended for clamping the foot (2a) onto the workpiece (2),
a rotary drive (8) for rotating the first clamping device (7) about the axis of rotation (6),
a second centric clamping device (9) for rotatably mounting the pin (5) of the workpiece (2) about the axis of rotation (6), wherein the second clamping device (9) has a plurality of clamping jaws (10) whose clamping surfaces are each formed by at least one running roller (11) which is mounted so as to be freely rotatable about an axis parallel to the axis of rotation (6), and
an axial clamping device (12) which is arranged on the side of the second clamping device (9) facing away from the first clamping device (7) and which has a clamping element (13) which is mounted so as to be rotatable about the axis of rotation (6) and which can be advanced in the axial direction up to a front-end abutment against the pin (5) of a workpiece (2) clamped in the first clamping device (7), in order to axially clamp the workpiece (2), **characterized in that** the second clamping device (9) and the axial clamping device (12) are fastened to one another and are guided in an axially displaceable manner as a unit.

2. Clamping fixture according to claim 1, **characterized in that** the first clamping device (7) is designed as a jaw chuck, in particular as a two-jaw chuck.

3. Clamping fixture according to claim 1 or 2, **characterized in that** the second clamping device (9) is designed as a jaw chuck, in particular as a two-jaw chuck having two running rollers (11) for each clamping jaw (10).

4. Clamping fixture according to one of the preceding claims, **characterized in that** the clamping element (13) is configured as a clamping cylinder.

5. Clamping fixture according to one of the preceding claims, **characterized in that** the clamping element (13) can be advanced axially at least to the level of the clamping jaws (10), in particular to at least the level of the running rollers (11).

6. Machine tool (1) for machining workpieces (2), comprising a clamping fixture (3) according to one of the preceding claims for clamping a workpiece (2) and comprising a cutting tool (4) which can be fed axially and radially for machining a clamped-in workpiece (2).

7. Machine tool according to Claim 6, **characterized in that** the rotary drive (8) of the clamping fixture (3) is formed by a driven machine axis.

8. Method for machining workpieces (2), which comprise a foot (2a) and a head (2b) having an, in particular cylindrical, pin (5), in a machine tool (1) according to Claim 6 or 7, comprising the following machining steps:
- clamping the foot (2a) of the workpiece (2) in the first clamping device (7) and then axially clamping the workpiece (2) by advancing the clamping element (13) up to a front-end abutment against the pin (5) of the workpiece (2);
- machining the pin (5) by rotating the workpiece (2) and by feeding the cutting tool (4) until the pin (5) is centred with respect to the axis of rotation (6);
- clamping the pin (5) in the second clamping device (9) and then releasing the axial clamping of the workpiece (2) by sliding back the clamping element (13);
- machining the workpiece (2), in particular roughing, by rotating the workpiece (2) and by feeding the cutting tool (4);
- axially clamping the workpiece (2) by advancing the clamping element (13) up to a front-end abutment against the pin (5) and then releasing the second clamping device (9);
- machining the pin (5) by rotating the workpiece (2) and by feeding the cutting tool (4) until the pin (5) is centred with respect to the axis of rotation (6);
- clamping the pin (5) in the second clamping device (9) and then releasing the axial clamping by sliding back the clamping element (13); and
- machining the workpiece (2), in particular finishing, by rotating the workpiece (2) and by feeding the cutting tool (4).

## Revendications

1. Dispositif de serrage (3) dévolu à l'ablocage d'une pièce d'usinage (2) pouvant tourner autour d'un axe de rotation (6), munie d'une base (2a) et d'une tête (2b) comportant un tenon (5) notamment cylindrique, comprenant
un premier système de serrage (7) centré, monté rotatif autour de l'axe de rotation (6) et conçu pour abloquer la base (2a) de la pièce d'usinage (2),
un entraînement en rotation (8), conçu pour faire tourner ledit premier système de serrage (7) autour dudit axe de rotation (6),
un second système de serrage (9) centré, affecté au montage rotatif du tenon (5) de ladite pièce d'usinage (2) autour dudit axe de rotation (6), lequel second système de serrage (9) est pourvu de plusieurs mâchoires de serrage (10) dont les surfaces de serrage sont constituées, à chaque fois, d'au moins un galet (11) monté à rotation libre autour d'un axe parallèle audit axe de rotation (6), et
un système (12) de serrage axial, implanté du côté dudit second système de serrage (9) qui pointe à l'opposé dudit premier système de serrage (7), et doté d'un élément d'ablocage (13) monté rotatif autour dudit axe de rotation (6) et pouvant être poussé en avant, dans la direction axiale, jusqu'à venir frontalement en applique contre le tenon (5) d'une pièce d'usinage (2) enserrée dans ledit premier système de serrage (7), afin d'abloquer ladite pièce d'usinage (2) dans le sens axial,
**caractérisé par le fait**
**que** le second système de serrage (9) et le système (12) de serrage axial sont fixés l'un à l'autre et sont guidés avec faculté de déplacement axial, sous la forme d'un ensemble unitaire.

2. Dispositif de serrage selon la revendication 1, **caractérisé par le fait que** le premier système de serrage (7) est réalisé sous la forme d'un mandrin à mâchoires, en particulier d'un mandrin à deux mâchoires.

3. Dispositif de serrage selon la revendication 1 ou 2, **caractérisé par le fait que** le second système de serrage (9) est réalisé sous la forme d'un mandrin à mâchoires, en particulier d'un mandrin à deux mâchoires comptant deux galets (11) pour chaque mâchoire de serrage (10).

4. Dispositif de serrage selon l'une des revendications précédentes, **caractérisé par le fait que** l'élément d'ablocage (13) est réalisé sous la forme d'un cylindre d'ablocage.

5. Dispositif de serrage selon l'une des revendications précédentes, **caractérisé par le fait que** l'élément d'ablocage (13) peut être poussé en avant, dans le sens axial, au moins jusqu'à la hauteur des mâchoires de serrage (10), en particulier au moins jusqu'à la hauteur des galets (11).

6. Machine-outil (1) destinée à l'usinage de pièces (2) par enlèvement de copeaux, équipée d'un dispositif de serrage (3) conforme à l'une des revendications précédentes, dévolu à l'ablocage d'une pièce d'usinage (2), et d'un outil de coupe (4) pilotable axialement et radialement, affecté à l'usinage d'une pièce (2) enserrée.

7. Machine-outil selon la revendication 6, **caractérisée par le fait que** l'entraînement en rotation (8) du dispositif de serrage (3) est constitué par un axe entraîné de ladite machine.

8. Procédé d'usinage par enlèvement de copeaux, dans une machine-outil (1) conforme à la revendication 6 ou 7, de pièces (2) munies d'une base (2a) et d'une tête (2b) comportant un tenon (5) notamment cylindrique,
comprenant les étapes opératoires suivantes :
- enserrement de la base (2a) de la pièce d'usinage (2) dans le premier système de serrage (7), suivi d'un enserrement axial de ladite pièce d'usinage (2) en poussant l'élément d'ablocage (13) en avant, jusqu'à la venue en applique frontale contre le tenon (5) de ladite pièce d'usinage (2) ;
- usinage dudit tenon (5) avec enlèvement de copeaux, par rotation imprimée à ladite pièce d'usinage (2) et par pilotage de l'outil de coupe (4) jusqu'à ce que ledit tenon (5) soit centré vis-à-vis de l'axe de rotation (6) ;
- enserrement dudit tenon (5) dans le second système de serrage (9), suivi d'un soulagement de l'enserrement axial de ladite pièce d'usinage (2) par poussée rétrograde exercée sur ledit élément d'ablocage (13) ;
- usinage de ladite pièce (2) avec enlèvement de copeaux, notamment dégrossissage, par rotation imprimée à ladite pièce d'usinage (2) et par pilotage dudit outil de coupe (4) ;
- enserrement axial de ladite pièce d'usinage (2) en poussant ledit élément d'ablocage (13) en avant, jusqu'à la venue en applique frontale contre ledit tenon (5), suivi d'un relâchement dudit second système de serrage (9) ;
- usinage dudit tenon (5) avec enlèvement de copeaux, par rotation imprimée à ladite pièce d'usinage (2) et par pilotage dudit outil de coupe (4) jusqu'à ce que ledit tenon (5) soit centré vis-à-vis dudit axe de rotation (6) ;
- enserrement dudit tenon (5) dans ledit second système de serrage (9), suivi d'un soulagement de l'enserrement axial par poussée rétrograde exercée sur ledit élément d'ablocage (13) ; et
- usinage de ladite pièce (2) avec enlèvement de copeaux, notamment finissage, par rotation imprimée à ladite pièce d'usinage (2) et par pilotage dudit outil de coupe (4).
